**Europäisches Patentamt**

(19) **European Patent Office**

**Office européen des brevets**

(11) Numéro de publication: **0 161 122**
**B1**

(12) **FASCICULE DE BREVET EUROPEEN**

(45) Date de publication du fascicule du brevet:
16.09.87

(51) Int. Cl.⁴: **F 16 B 11/00, B 23 K 11/32**

(21) Numéro de dépôt: **85400373.8**

(22) Date de dépôt: **27.02.85**

(54) Procédé d'assemblage de structure par collage au trempé.

(30) Priorité: **22.03.84 FR 8404464**

(43) Date de publication de la demande:
**13.11.85 Bulletin 85/46**

(45) Mention de la délivrance du brevet:
**16.09.87 Bulletin 87/38**

(84) Etats contractants désignés:
**DE GB IT**

(56) Documents cités:
**DE - A - 1 627 719**
**DE - A - 2 854 766**
**FR - A - 2 156 245**
**FR - A - 2 428 168**
**US - A - 3 972 111**

(73) Titulaire: **AUTOMOBILES PEUGEOT, Société dite:,
75, Avenue de la Grande-Armée, F-75761 Paris
Cedex 16 (FR)**
Titulaire: **AUTOMOBILES CITROEN, 62 Boulevard
Victor-Hugo, F-92200 Neuilly-sur-Seine (FR)**

(72) Inventeur: **Haberer, Claude, 31 bis, rue de Solferino,
F-92100 Boulogne (FR)**

(74) Mandataire: **Fabien, Henri et al, PEUGEOT SA. DAT /
BPI 18, rue des Fauvelles, F-92250 La
Garenne-Colombes (FR)**

ACTORUM AG

## Description

L'invention concerne un procédé d'assemblage de structures, préférentiellement de carrosseries automobiles.

On sait que les carrosseries automobiles sont généralement assemblées au soudage par résistance et que plusieurs milliers de points de soudure sont nécessaires.

Ce procédé présente des inconvénients:
— les liaisons étant discontinues les contraintes sont mal réparties
— les liaisons ne sont pas étanches, ce qui nécessite la mise en oeuvre de moyens d'étanchéité
— les zones de recouvrement difficile à protéger par électrophorèse sont sujettes à la corrosion ce qui nécessite des protections complémentaires telles que par exemple l'emploi de tôles pré-revêtues.

Le procédé qui fait l'objet de l'invention se caractérise par le fait que les structures sont préassemblées par un soudage comprenant un minimum de points de soudure nécessaires au maintien pendant la manutention et que les structures ainsi préassemblées sont collées par un trempé dans un bain de colle.

Le brevet US 3 972 111, décrit un procédé d'assemblage de pièces métalliques combinant un soudage par points et un collage, avec introduction de colle dans les jonctions, après le soudage, par capillarité ou par des moyens de dépression. La pénétration de la colle dans les jonctions pose un problème difficile du fait que les pièces sont déjà assemblées, le collage contribuant à renforcer l'assemblage.

Dans un procédé qui fait l'objet de l'invention, le trempé des structures préassemblées suffit pour la pénétration de la colle; cependant il pose le problème de l'excédent de colle, qui est résolu selon les deux variantes décrites ci-dessous.

Le procédé comporte en effet deux principales variantes selon que l'adhésif peut servir de revêtement anti-corrosion ou qu'un tel revêtement est nécessaire en plus du collage.

Dans la première famille de variantes où le même revêtement obtenu par un trempé, cumule les fonctions d'adhésif et de revêtement protecteur anti-corrosion on peut citer les sous-variantes suivantes:
— Revêtement par immersion dans un lit fluidisé de poudre après avoir étuvé la caisse à une température supérieure au point de fusion de la poudre de telle sorte que les grains en fusion puissent pénétrer dans les jonctions des tôles.
— Revêtement par un trempé dans un bain électrophorèse à fort extrait sec, de telle sorte que par capillarité le dépôt remplisse les interstices des joints. Cette opération est suivie d'une opération de cuisson.
— Revêtement par un trempé dans un bain de résine thermofusible, après avoir préchauffé la caisse à une température supérieure à celle du bain. Cette opération est suivie d'une opération d'égouttage et de refroidissement.
— Revêtement par un premier trempé dans un bain d'activateur; cette opération étant suivie d'une opération d'égouttage et de séchage; et par un deuxième trempé dans une résine monomère ou prépolymère liquide, ce deuxième trempé étant suivi d'une opération d'égouttage et de polymérisation.

Dans la deuxième famille de variantes les opérations de collage et de traitement anti-corrosion sont séparées.

Préalablement à l'opération de préassemblage, on applique sur les zones de jonction dégraissées un activateur qu'on fait ensuite bien sécher.

On procède ensuite au préassemblage et au collage par immersion. Pour celà on effectue:
— Soit un trempé dans un bain de résine monomère ou prépolymère qui ne polymérise qu'aux jonctions en présence de l'activateur.
— Soit un trempé dans un bain de colle anaérobie qui ne réagira qu'aux jonctions sur le support activé.

On procède ensuite aux opérations d'égouttage, de polymérisation et de rinçage de l'excédent de colle.

Le traitement protecteur anti-corrosion se fait sur la structure assemblée après le collage.

## Revendications

1. Procédé d'assemblage de structures par collage, préférentiellement de carrosseries automobiles, caractérisé par le fait que les strcutures sont préassemblées par un soudage comprenant un minimum de points de soudure nécessaires au maintien pendant la manutention et que les structures ainsi préassemblées sont collées par un trempé dans un bain de matériau adhésif; ledit matériau adhésif pouvant cumuler les fonctions de collage et de revêtement anti-corrosion ou bien dans le cas où ces deux fonctions ne sont pas cumulées un activateur est enduit et séché sur les jonctions préalablement au préassemblage et après le trempé l'excédent d'adhésif qui se compose d'un produit polymérisant en présence d'un activateur est éliminé par un rinçage.

2. Procédé selon la revendication 1, caractérisé en ce que le revêtement adhésif cumule les fonctions de collage et de revêtement anti-corrosion, des moyens étant prévus pour la pénétration de l'adhésif dans les jonctions.

3. Procédé selon la revendication 2, caractérisé en ce que le trempé est effectué dans un lit fluidisé de poudre après avoir étuvé la structure à une température supérieure au point de fusion de la poudre.

4. Procédé selon la revendication 2, caractérisé en ce que le trempé est effectué dans un bain électrophorèse à fort extrait sec.

5. Procédé selon la revendication 2, caractérisé en ce que le trempé est effectué dans un bain de résine thermofusible après avoir préchauffé la caisse à une température supérieure à celle du bain.

6. Procédé selon la revendication 2, caractérisé en ce qu'il comporte un premier trempé dans un bain d'activateur suivi d'un deuxième trempé dans une résine monomère ou prépolymère.

7. Procédé selon la revendication 1, caractérisé en ce que le trempé pour le collage précède l'opération de protection anti-corrosion, des moyens de rinçage étant prévus pour éliminer l'excédent d'adhésif à l'extérieur des jonctions.

**Patentansprüche**

1. Verfahren zum Verbinden einer Konstruktion, vorzugsweise von Kraftfahrzeug-Karosserien, durch Verkleben, dadurch gekennzeichnet, dass die Konstruktionsteile durch eine Schweissung mit einem Minimum von zum Halten während der Handhabung erforderlichen Schweisspunkten verbunden werden und dass die so vorverbundenen Konstruktionsteile durch ein Eintauchen in ein Klebermaterialbad verklebt werden, welches Klebermaterial die Kleb- und Antikorrosionsüberzugsfunktionen vereinen kann, oder wobei, falls diese beiden Funktionen nicht vereint sind, ein Aktivator auf die Verbindungsstellen vor dem Vorverbinden aufgebracht und getrocknet wird, und nach dem Eintauchen der Überschuss an Kleber, der aus einem in Gegenwart eines Aktivators polymerisierenden Stoff besteht, durch ein Spülen entfernt wird.

2. Verfahren nach dem Anspruch 1, dadurch gekennzeichnet, dass der Kleberüberzug die Kleb- und Antikorrosionsüberzugsfunktionen vereint, wobei Mittel zum Eindringen des Klebers in die Verbindungsstellen vorgesehen werden.

3. Verfahren nach dem Anspruch 2, dadurch gekennzeichnet, dass das Eintauchen in einer Pulverwirbelschicht durchgeführt wird, nachdem die Konstruktion auf eine Temperatur über dem Schmelzpunkt des Pulvers erhitzt worden ist.

4. Verfahren nach dem Anspruch 2, dadurch gekennzeichnet, dass das Eintauchen in einem Elektrophoresebad mit starkem Trockenauszug durchgeführt wird.

5. Verfahren nach dem Anspruch 2, dadurch gekennzeichnet, dass das Eintauchen in einem Bad wärmeschmelzbaren Harzes durchgeführt wird, nachdem die Karosserie auf eine Temperatur über der das Bades vorerhitzt worden ist.

6. Verfahren nach dem Anspruch 2, dadurch gekennzeichnet, dass es ein erstes Eintauchen in ein Aktivatorbad, gefolgt von einem zweiten Eintauchen in ein Monomer- oder Vorpolymerharz, umfasst.

7. Verfahren nach dem Anspruch 1, dadurch gekennzeichnet, dass das Eintauchen zum Verkleben dem Vorgang zum Antikorrosionsschutz vorausgeht, wobei Spülmittel zum Entfernen des Kleberüberschusses ausserhalb der Verbindungsstellen vorgesehen sind.

**Claims**

1. Method for assembling structures by bonding, preferably automobile bodywork, characterised by the fact that the structures are initially assembled by a welding operation comprising a minimum of spot welds required for maintaining the assembly during handling and that the structures thus preassembled are bonded by dipping in a bath of adhesive material; the said adhesive material being able to combine the functions of bonding and anti-corrosion coating, or else in the case in which these two functions are not combined, an activator is applied and dried on the joints prior to the preassembling operation, and following the dipping operation, the surplus of adhesive which comprises a product polymerising in the presence of an activator, is eliminated by a rinsing operation.

2. Method according to claim 1, characterised in that the adhesive coating combines the functions of bonding and anti-corrosion coating, means being provided to allow of penetration of the adhesive into the joints.

3. Method according to claim 2, characterised in that the dipping operation is carried out in a fluidised bed of powder after the structure has been stove-heated to a temperature exceeding the melting point of the powder.

4. Method according to claim 2, characterised in that the dipping operation is carried out in an electrophoresis bath containing a strong drying extract.

5. Method according to claim 2, characterised in that the dipping operation is carried out in a bath of thermofusible resin after preheating the body to a temperature exceeding that of the bath.

6. Method according to claim 2, characterised in that it comprises a first dipping operation in an activator bath followed by a second dipping operation in a monomer or prepolymer resin.

7. Method according to claim 1, characterised in that the dipping operation for effecting bonding precedes the operation for anti-corrosive protection, rinsing means being provided to eliminate the surplus of adhesive external to the joints.